# EUROPÄISCHE PATENTSCHRIFT

(11) **EP 2 262 611 B1**
(45) Veröffentlichungstag und Bekanntmachung des Hinweises auf die Patenterteilung: **08.06.2011**
(21) Anmeldenummer: 09728788.2
(22) Anmeldetag: 31.03.2009
(51) Int. Cl.: B23Q 11/00, F16D 59/02

(54) **WERKZEUGMASCHINE MIT BREMSSYSTEM**
MACHINE TOOL COMPRISING A BRAKING SYSTEM
MACHINE-OUTIL MUNIE D'UN SYSTÈME DE FREINAGE

(30) Priorität: 31.03.2008 DE 102008000891
(43) Veröffentlichungstag der Anmeldung: 22.12.2010
(73) Patentinhaber: Robert Bosch GmbH, 70442 Stuttgart (DE)
(72) Erfinder: WINKLER, Thomas, 07589 Lindenkreuz (DE)
(86) Internationale Anmeldenummer: PCT/EP2009/053787
(87) Internationale Veröffentlichungsnummer: WO 2009/121866

(56) Entgegenhaltungen:
- DE-A1- 2 147 669
- DE-A1- 19 536 995
- DE-U1- 8 708 955
- US-A- 4 531 617
- US-A- 5 105 925

## Beschreibung

### Stand der Technik

Die vorliegende Erfindung betrifft eine Werkzeugmaschine, mit einem Schutzsystem, insbesondere eine Säge und vorzugsweise eine Kreissäge, wobei die Schutzwirkung des Schutzsystems innerhalb einer sehr geringen Zeitspanne, die beispielsweise im Bereich einiger Millisekunden (typischerweise 1 - 50 ms) liegt, entfaltet wird, um einen Benutzer der Werkzeugmaschine in Gefahrensituationen vor Verletzungen zu schützen.

Derzeit existieren im Wesentlichen drei verschiedene Ansätze zur Realisierung eines Schutzsystems für Tisch- und Format-Kreissägen, das verhindern soll, dass ein Benutzer mit dem umlaufenden Sägeblatt in Kontakt kommt oder eine folgenschwere Schnittverletzung davonträgt.

Bei dem unter dem Firmennamen Sah Stopp Inc. geführten und vertriebenen Schutzsystem eines amerikanischen Herstellers handelt es sich um ein Notbremssystem, das ein Abbremsen der Werkzeugmaschine aufgrund eines direkten Eingriffes einer Brems-Aktorik mit dem Sägeblatt ermöglicht, sobald ein entsprechend gestalteter Sensor eine Gefahrensituation detektiert hat. Hierbei wird durch den Einsatz eines Hitzdrahtauslösers ein drehbar angeordneter Aluminiumblock mit Hilfe einer vorgespannten Feder in die Verzahnung des laufenden Sägeblattes gestoßen, welcher sich darin verkeilt und auf diese Weise die Rotationsenergie aller während des Sägevorgangs umlaufenden Geometrien der Werkzeugmaschine absorbiert. Als Nebeneffekt wird dieser einseitige Kraftangriff auf die Schneiden dazu genutzt, das Sägeblatt durch eine konstruktiv speziell ausgeführte Aufhängung, die am Sägetisch angeordnet ist, in den Sägetisch zu versenken. Mit Hilfe dieser Anordnung ist man dazu in der Lage, folgenschwere körperliche Schäden von dem den Schutzmechanismus auslösenden Bediener der Werkzeugmaschine abzuwenden. Nachteilig ist hierbei der direkte Angriff auf das Bearbeitungswerkzeug, also auf die Schneidengeometrie des Sägeblattes, da durch Ausbrechen von Teilen der Verzahnung zusätzliches Gefahrenpotential für den Bediener entsteht. Des Weiteren ist zur Wiederherstellung der Bereitschaft des Schutzsystems ein Austausch der Bremseinheit inklusive des Sägeblattes durch eine einsatzbereite Ersatzeinheit erforderlich, die der Bediener bevorraten muss, um nach erfolgtem Bremsvorgang unter Inanspruchnahme der Schutzfunktion weiterarbeiten zu können. Dies ist mit erheblichen Folgekosten und entsprechendem Zeitaufwand für die Beschaffung und Installierung verbunden. Zudem kann davon ausgegangen werden, dass alle vom Bremsvorgang betroffenen Bauteile, d.h. alle umlaufenden Geometrien der Werkzeugmaschine, starken Beanspruchungen während der Verzögerungsphase ausgesetzt werden. Weder der Hersteller noch entsprechende Veröffentlichungen zu diesem System weisen Daten bezüglich der Dauerfestigkeit der Anlage aus.

Ein weiterer Ansatz verfolgt die Verwendung eines Schutzsystems zur ausschließlichen Absenkung des Sägeblattes im Sägetisch, ohne einen Bremsvorgang des Sägeblattes einzuleiten. Mit Hilfe eines pyrotechnischen Zündsatzes wird hierbei das Sägeblatt inklusive der Hauptwelle und deren Lagerung aus der Gefahrenzone entfernt, so dass schwerwiegende Verletzungen des Bedieners verhindert werden können. Nachteilig an dieser Schutzsystemart ist die Notwendigkeit der Bewegung relativ großer Massen in Form der abzusenkenden Anordnungen unter strengen Zeitvorgaben im Millisekundenbereich. Die hierdurch notwendigen pyrotechnischen Zünder, welche sich für diese Schutz-Aktorik als unerlässlich erweisen, rufen ferner eine teure Teilreversibilität hervor, welche ein sofortiges Weiterarbeiten an der Werkzeugmaschine mit einem einsatzbereiten Schutzsystem sowohl zeitlich als auch organisatorisch einschränken. Weiterhin eignet sich dieses Schutzsystem aus Gründen begrenzten Bauraumes und sehr spezifischer Verfahrensweise nur für größere stationäre Geräte, wie beispielsweise Tischkreissägen, die einen solchen Aufbau in ihrem Innern ermöglichen. Für die Anwendung an kleineren handgeführten Geräten, wie beispielsweise Kapp- und Gehrungssägen oder Paneelsägen, scheidet dieses System hingegen aus.

Eine Offenlegung aus einem öffentlich geförderten Projekt namens "Cut-Stop" (VDI/VDE/IT) zu einem Schutzsystem für Formatkreissägen vom Institut für Werkzeugmaschinen (IFW) der Universität Stuttgart beschreibt einen Ansatz, welcher mittels einer Sonderform einer Scheibenbremsanlage, nämlich einer selbstverstärkenden Keilbremse, die Hauptwelle der Werkzeugmaschine und somit das Sägeblatt zum Stillstand bringt. Hierbei wird mit Hilfe eines pyrotechnischen Zünders ein Keil beschleunigt und anschließend zwischen eine feststehende Keilführung in Form eines modifizierten Bremssattels und die rotierende Bremsscheibe gestoßen. Für die Auswahl und Kombination spezifischer Keilwinkel α und Bremsbelagwerte µ wirkt die Anordnung selbsthemmend, so dass mit diesem Aufbau in Abhängigkeit der zu verzögernden Massenträgheit die jeweiligen zeitlichen Anforderungen an dem Bremsvorgang erfüllt werden können. Der Nachteil dieses Schutzsystems liegt jedoch darin, dass auch hierbei, wie es in der genannten Veröffentlichung beschrieben wird, im Anschluss an die Auslösung der Schutz-Aktorik ein Austausch der kompletten Bremseinheit aufgrund des sich in der Reibpaarung verklemmenden Keils erforderlich ist. Der benötigte zeitliche Aufwand des durchzuführenden Arbeitsumfangs beläuft sich hierbei auf ca. 10-12 Minuten für die vollständige Wiederherstellung der Systembereitschaft. Somit gilt auch hier eine teilweise Einschränkung der unverzüglichen Systemreversibilität.

Aus der DE 195 36 995 A1 ist eine Sicherheitsbremse für Aufzüge bekannt, die eine Einrichtung aufweist, die bei Überschreiten einer vorgegebenen Höchstgeschwindigkeit des Transportmittels den Antrieb mit einer geschwindigkeitsabhängigen Verzögerung abbremst Und ggfls. auch anhält. Die Sicherheitsbremse der DE 195 36 995 A1 wirkt drehzahlabhängig unmittelbar auf die Treibscheibe der seilbetriebenen Förderanlage und vermag deren Drehgeschwindigkeit zu begrenzen. Die als Fliehkraftbremse ausgebildete Sicherheitsbremse weist zusätzlich eine Einrichtung zum Verstärken der Bremskraft in Abhängigkeit von der Fördergeschwindigkeit auf.

Ausgehend von diesem Stand der Technik ist es eine Aufgabe der vorliegenden Erfindung, eine Werkzeugmaschine mit alternativem Aufbau zu schaffen, wobei ein Schutzsystem der Maschine seine Schutzwirkung sehr kurzfristig insbesondere innerhalb einiger Millisekunden (typischerweise 1 - 50 ms), entfaltet und die eingangs beschriebenen Probleme zumindest teilweise behebt

### Offenbarung der Erfindung

Zur Lösung dieser Aufgabe schafft die vorliegende Erfindung eine Werkzeugmaschine, insbesondere eine Säge, mit einem Notbremssystem zum abrupten Abbremsen einer umlaufenden Welle der Werkzeugmaschine, wobei das Notbremssystem eine Bremstrommel und zumindest eine Bremsbacke aufweist, die zum Abbremsen der Welle der Werkzeugmaschine miteinander in Eingriff gebracht werden. Dabei sind die Bremstrommel und die zumindest eine Bremsbacke derart ausgebildet und angeordnet, dass der Bremseingriff zwischen der Bremstrommel und der Bremsbacke unter dem Einfluss der aus der Rotation der Welle resultierenden Fliehkraft bzw. Fliehbeschleunigung erfolgt.

Die vorliegende Erfindung ist demnach darauf ausgerichtet, die Verzögerung der umlaufenden Welle der Werkzeugmaschine, durch die Nutzung der vorhandenen Rotationsenergie der umlaufenden Welle mit Hilfe des Aufbaus einer selbstverstärkenden oder selbsthemmenden Reibpaarung zu realisieren. Auf diese Weise kann der vorgegebene Zeitrahmen der Abbremsung, der im Bereich weniger Millisekunden liegt, gewährleistet werden. Die erfindungsgemäße Ausgestaltung der Bremse erlaubt die Abbremsung eines von einer Welle direkt oder indirekt angetriebenen Werkzeuges in sehr kurzen Zeiten, die typischerweise im Bereich von 1 bis 50 ms, vorteilhafterweise im Bereich von 1 bis 20 ms und insbesondere im Bereich von 10ms und weniger liegen.

Vorteilhafterweise wird bei der Abbremsung der Werkzeugmaschine nicht direkt in das Werkzeug eingegriffen. Ein solcher Eingriff würde unweigerlich mit der Zerstörung des Werkzeuges einhergehen. Die erfindungsgemäße Werkzeugmaschine bremst die das Werkzeug direkt oder indirekt antreibende Welle ab. Auf diese Weise bleibt das Werkzeug selbst unbeschädigt.

Dabei sollte klar sein, dass die Auslösung des Abbremsvorgangs, die beispielsweise als Antwort auf ein Ausgangssignal eines Sensors erfolgt, der eine Gefahrensituation für den Benutzer detektiert, mechanisch, elektromechanisch, pyrotechnisch, pneumatisch oder hydraulisch erfolgen kann und prinzipiell an kein bestimmtes Medium gebunden ist, wobei jedoch eine elektromechanische Auslösung aufgrund eines einfachen Aufbaus und einer sehr guten Reversibilität bevorzugt wird.

Bei der erfindungsgemäßen Werkzeugmaschine kann es sich um eine Säge, insbesondere eine Kreissäge, beispielsweise eine Tischkreissäge oder handgehaltene Säge, aber auch um eine Kapp- und Gehrungssäge, eine Paneelsäge, eine Bandsäge, eine Dekupiersäge oder Ähnliches handeln.

Darüber hinaus kann die erfindungsgemäße Werkzeugmaschine beispielsweise auch als Schleifmaschine oder Bohrmaschine, insbesondere eine Standbohrmaschine ausgebildet sein.

Die erfindungsgemäße Werkzeugmaschine ist nicht auf die genannten Ausführungsbeispiele beschränkt. Es sollte klar sein, dass das erfindungsgemäße Bremssystem auch auf andere Werkzeugmaschinen anwendbar ist, welche aus spezifischem Anlass auf eine gezielt auslösbare Verzögerung unter gegebenem Zeitrahmen im Bereich von Millisekunden angewiesen sind. Insbesondere Werkzeugmaschinen mit einem Werkzeug, welches direkt oder indirekt über eine Welle betrieben wird, lassen sich erfindungsgemäß ausgestalten.

Gemäß einer Ausgestaltung der vorliegenden Erfindung ist die zumindest eine Bremsbacke des Notbremssystems der erfindungsgemäßen Werkzeugmaschineschwenkbar an einem Bremsbackenträger befestigt, der an der umlaufenden Welle angeordnet ist und mit dieser umläuft.

Bevorzugt ist eine Verriegelungseinrichtung vorgesehen, die zwischen einer verriegelten Stellung, in der die Bremsbacke an dem Bremsbackenträger gehalten wird, und einer entriegelten Stellung verstellbar ist, in der die zumindest eine Bremsbacke derart freigegeben wird, dass diese eine Schwenkbewegung in Richtung der Bremstrommel ausführt, um den Bremseingriff zu erzeugen. Mit anderen Worten wird die mit der umlaufenden Welle rotierende zumindest eine Bremsbacke unter Ausnutzung der Fliehkraft der umlaufenden Welle abrupt innerhalb weniger Millisekunden in Richtung der ortsfesten Bremstrommel bewegt, sobald die Verriegelungseinrichtung in ihre entriegelte Stellung überführt wird.

Die Verriegelungseinrichtung umfasst bevorzugt zumindest ein Sperrelement, das zwischen einer verriegelten Stellung, in der es mit der zumindest einen Bremsbacke in Eingriff ist, und einer entriegelten Stellung bewegbar ist, in der es von der Bremsbacke entkoppelt ist. Ein solches Sperrelement kann beispielsweise als Sperrbolzen oder dergleichen ausgebildet sein.

Die Verriegelungseinrichtung umfasst vorteilhaft einen Aktuator, der die Verriegelungseinrichtung aus der verriegelten Stellung in die entriegelte Stellung überführt. Bei diesem Aktuator kann es sich beispielsweise um einen Magnet-Aktuator handeln, der einen Ringanker zieht, an welchem ein Sperrelement in Form eines Sperrbolzens befestigt ist, um den Sperrbolzen aus der Bremsbacke auszurücken, so dass diese freigegeben wird.

Das Notbremssystem umfasst zudem bevorzugt eine Kopplungseinrichtung, die derart beschaffen ist, dass sie in ihrer gekoppelten Stellung die abzubremsende Welle mit einem Antriebsstrang verbindet, und dass sie während einer Notbremsung automatisch in ihre entkoppelte Stellung überführt wird, in der die abzubremsende Antriebswelle von dem Antriebsstrang entkoppelt ist. Eine derartige Entkopplung des Antriebsstrangs während eines Notbremsvorgangs stellt sicher, dass der Antriebsstrang, der beispielsweise eine Antriebswelle und etwaige Übersetzungsstufen aufweisen kann, von dem eigentlichen Bremsvorgang ausgeklammert wird, wodurch der Antriebsstrang den während des Bremsvorgangs auftretenden großen Verzögerungsmomenten nicht ausgesetzt ist. Dies bringt zum einen den Vorteil, dass Komponenten des Antriebsstranges aufgrund des Bremsvorgangs nicht beschädigt werden können. Zum anderen müssen die Geometrien der antriebsseitigen Komponenten konstruktiv nicht an die Erfordernisse des Bremsvorgangs angepasst werden, weshalb sie weniger robust und preiswerter produziert werden können. Zusätzlich ergibt sich hierdurch eine nutzbringende Verringerung des zu verzögernden Massenträgheitsmomentes, da die Komponenten des Antriebsstranges nicht abgebremst werden müssen. Somit kann die Systemlast während der Verzögerungsphase entscheidend vermindert werden. Entsprechend kann die für den Abbremsvorgang des Sägeblattes erforderliche Zeitdauer bei gleicher Krafteinwirkung wesentlich verkürzt werden. Alternativ kann natürlich auch die Krafteinwirkung bei unveränderter Abbremszeitdauer verringert werden.

Gemäß einer bevorzugten Ausgestaltung ist die abzubremsende Welle als Hohlwelle ausgebildet, in deren Hohlraum eine Antriebswelle des Antriebsstranges positioniert ist. Die Kopplungseinrichtung ist dabei vorteilhaft durch einen an der zumindest einen Bremsbacke vorgesehenen Vorsprung gebildet, der in der gekoppelten Stellung durch eine in der abzubremsenden Welle vorgesehene Durchgangsöffnung in eine Aussparung der Antriebswelle greift, so dass die Antriebswelle und die abzubremsende Welle drehfest miteinander verbunden sind, und der in der entkoppelten Stellung aus dem Eingriff mit der Aussparung der Antriebswelle kommt, so dass die abzubremsende Welle nicht länger von der Antriebswelle angetrieben wird. Auf diese Weise kann eine Entkopplung des Antriebsstranges während des Abbremsvorgangs realisiert werden. Bevorzugt ist der Vorsprung mit der Aussparung formschlüssig in Eingriff, wodurch ein sicherer Eingriff des Vorsprungs in der Aussparung erzielt wird. Hierzu kann der Vorsprung beispielsweise bogenförmig und die Aussparung prismaförmig ausgebildet sein.

An dieser Stelle sei darauf hingewiesen, dass die Anzahl der Vorsprünge nicht der Anzahl der Aussparungen entsprechen muss. So können beispielsweise vier Aussparungen und lediglich zwei Vorsprünge vorgesehen sein. Dies ist dahingehend von Vorteil, dass die Antriebswelle nach einem Auslösen des Notbremssystems nur geringfügig gedreht werden muss, um die Vorsprünge wieder in einem Paar von Aussparungen anzuordnen. Auch können mehr als zwei Bremsbacken vorgesehen werden, von denen jedoch nur zwei über entsprechende aus einem Vorsprung und einer Aussparung gebildete Verbindungen an der Antriebswelle festgelegt werden müssen.

Zudem weist das erfindungsgemäße Notbremssystem bevorzugt eine Rückstelleinrichtung zum Zurückbewegen der zumindest einen Bremsbacke in ihre Ausgangslage auf, um eine vollständige Systemreversibilität nach erfolgtem Abbremsvorgang zu gewährleisten. Die Rückstelleinrichtung ist dabei in enger Abstimmung mit der Selbstverstärkung der Reibpaarung und damit mit der Geometrie des Bremssystems ausgelegt. Die Rückstelleinrichtung kann beispielsweise sowohl durch den Einsatz von entsprechend dimensionierten Zug- als auch Druckfederelementen realisiert werden.

### Ausführungsbeispiele

Nachfolgend werden beispielhafte Ausführungsformen der vorliegenden Erfindung unter Bezugnahme auf die beiliegenden Zeichnungen genauer beschrieben. Die Beschreibung, die zugehörigen Figuren sowie die Ansprüche enthalten zahlreiche Merkmale in Kombination. Ein Fachmann wird diese Merkmale, insbesondere auch die Merkmale verschiedener Ausführungsbeispiele, auch einzeln betrachten und zu sinnvollen, weiteren Kombinationen zusammenfassen.

Es zeigt:
- Fig. 1: eine schematische Vorderansicht eines Notbremssystems einer erfin- dungsgemäßen Werkzeugmaschine gemäß einer Ausführungsform der vor- liegenden Erfindung in einem Zustand, in dem der Bremsvorgang nicht aus- gelöst wurde;
- Fig. 2: eine schematische Vorderansicht des in Fig. 1 dargestellten Notbremssys- tems in einem Zustand, in dem der Abbremsvorgang ausgelöst wurde;
- Fig. 3: eine Längsschnittansicht des in den Fig. 1 und 2 dargestellten Notbrems- systems in einem Zustand, in dem der Bremsvorgang nicht ausgelöst wur- de;
- Fig. 4: eine schematische Längsschnittansicht des in den Fig. 1 bis 3 dargestellten Notbremssystems in einem Zustand, in dem der Bremsvorgang ausgelöst wurde;
- Fig. 5: eine schematische Querschnittansicht des in den Fig. 1 bis 4 dargestellten Notbremssystems in einem Zustand, in dem der Bremsvorgang nicht aus- gelöst wurde; und
- Fig. 6: eine schematische Querschnittansicht des in den Fig. 1 bis 5 dargestellten Notbremssystems in einem Zustand, in dem der Bremsvorgang ausgelöst wurde.
- Fig. 7: ein erstes Ausführungsbeispiel einer erfindungsgemäßen Werkzeugma- schine mit Notbremssystem in Form einer Tischkreissäge;
- Fig. 8: ein weiteres Ausführungsbeispiel der erfindungsgemäßen Werkzeugma- schine mit Notbremssystem in Form einer Kappsäge;
- Fig. 9: ein weiteres Ausführungsbeispiel der erfindungsgemäßen Werkzeugma- schine mit Notbremssystem in Form einer Bandsäge;
- Fig. 10: ein weiteres Ausführungsbeispiel der erfindungsgemäßen Werkzeugma- schine mit Notbremssystem in Form einer Dekupiersäge;
- Fig. 11: ein weiteres Ausführungsbeispiel der erfindungsgemäßen Werkzeugma- schine mit Notbremssystem in Form einer Schleifmaschine;
- Fig. 12: ein weiteres Ausführungsbeispiel der erfindungsgemäßen Werkzeugma- schine mit Notbremssystem in Form einer Bohrmaschine;
- Fig. 13: ein weiteres Ausführungsbeispiel der erfindungsgemäßen Werkzeugma- schine mit Notbremssystem in Form einer Handkreissäge;

### Beschreibung der Ausführungsbeispiele

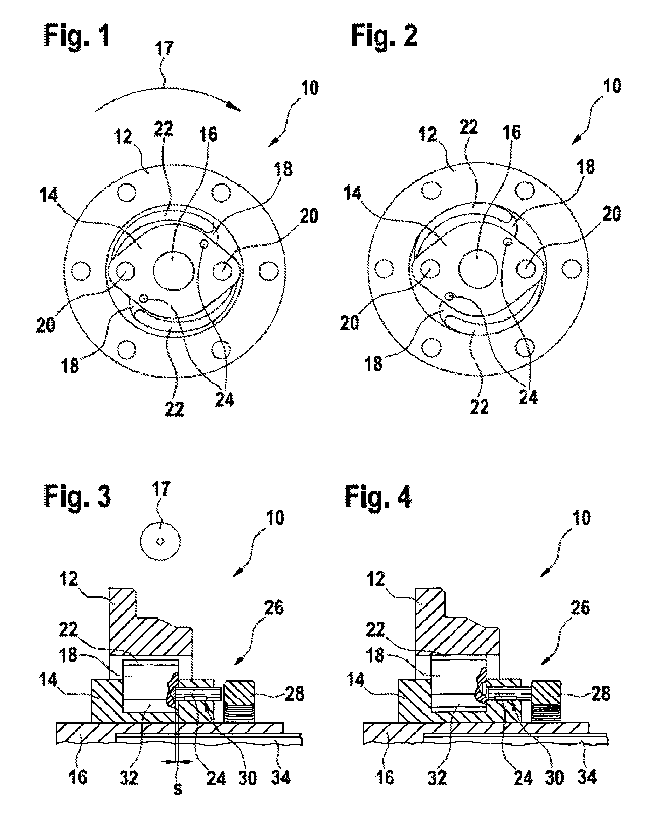

Die Figuren 1 bis 6 zeigen schematische Ansichten eines Notbremssystems für erfindungsgemäße Werkzeugmaschinen, das allgemein mit der Bezugsziffer 10 bezeichnet ist und dazu dient, ein Werkzeug der Werkzeugmaschine, beispielsweise ein Sägeblatt, in einer Gefahrensituation innerhalb eines sehr kurzen Zeitraums, der vorteilhafterweise im Bereich weniger Millisekunden liegt, zum Stillstand zu bringen.

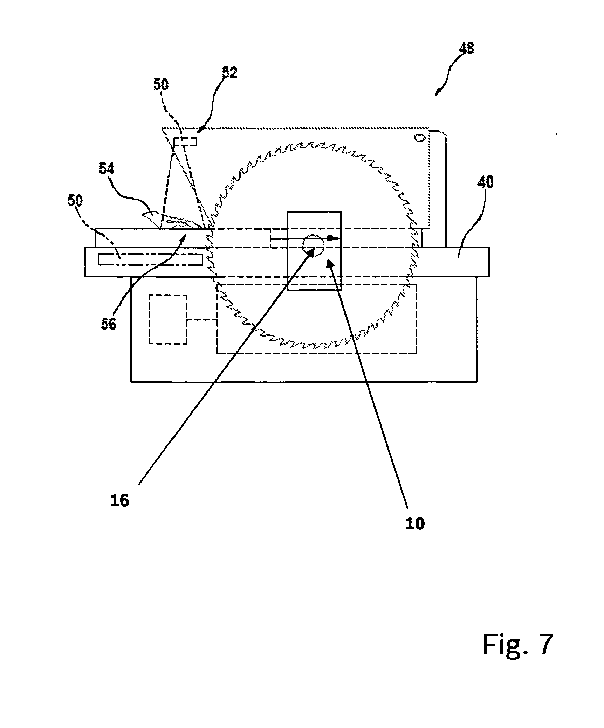

Die Figuren 7 bis 13 zeigen dann beispielhaft Werkzeugmaschinen mit einem solchen Notbremssystem.

Bevor auf die Integration des Notbremssystems in diverse Werkzeugmaschinen eingegangen werden soll, wird vorab der Aufbau und die Funktion des Notbremssystems beschrieben.

Das Notbremssystem 10 umfasst eine feststehende Bremstrommel 12, die an einem nicht näher dargestellten Rahmenbauteil der Tischkreissäge befestigt ist. Dieses Rahmenbauteil muss konstruktiv derart ausgelegt sein, dass es den während der Verzögerungsphase entstehenden Bremsmomenten standhält und diese aufnehmen kann. Ferner umfasst das Notbremssystem 10 einen Bremsbackenträger 14, der fest mit einer sägeblattseitigen Abtriebswelle 16 verbunden ist, so dass er mit dieser in der mit dem Pfeil 17 gekennzeichneten Drehrichtung umläuft. An dem Bremsbackenträger 14 sind zwei diametral einander gegenüberliegende Bremsbacken 18 befestigt, die jeweils um einen Schwenkbolzen 20 drehbar gelagert sind. Die Bremsbacken 18 sind an ihrer zur Bremstrommel 12 weisenden Fläche jeweils mit einem Reibbelag 22 versehen, wobei diese Reibbeläge 22 während eines Abbremsvorgangs des Notbremssystems 10 mit der feststehenden Bremstrommel 12 in Eingriff kommen, so dass die Reibbeläge 22 und die Bremstrommel 12 eine Reibpaarung bilden. In dem in Fig. 1 dargestellten Zustand, in dem der Bremsvorgang noch nicht ausgelöst wurde, werden die Bremsbacken 18 mit Hilfe von Sperrbolzen 24 fest an dem Bremsbackenträger 14 gehalten, so dass sie sich nicht um die Schwenkbolzen 20 drehen können.

Diese Sperrbolzen 24 sind Teil einer Verriegelungseinrichtung 26, die ferner einen Magnet-Aktuator 28 aufweist, mit dem die Sperrbolzen 24 zwischen einer verriegelten Stellung, in der die Bremsbacken 18 an dem Bremsbackenträger 14 gehalten werden, und einer entriegelten Stellung verstellbar sind, in der die Bremsbacken 18 derart freigegeben werden, dass diese eine Schwenkbewegung um ihre Schwenkbolzen 20 in Richtung der Bremstrommel 12 ausführen, um den Bremseingriff zwischen den Reibbelägen 22 und der Bremstrommel 12 zu erzeugen. Wie es in Fig. 3 gezeigt ist, ist der Magnet-Aktuator 28 der Verriegelungseinrichtung 26 fest an der Abtriebswelle 16 befestigt. Alternativ kann der Magnet-Aktuator 28 auch an einem nicht dargestellten, ortfesten Gehäuseteil befestigt sein und berührungslos auf die Sperrbolzen 24 einwirken. Die Sperrbolzen 24, die durch den Magnet-Aktuator 28 vor- und zurückbewegbar sind, erstrecken sich durch in dem Bremsbackenträger 14 vorgesehene Durchgangsöffnungen 30 und greifen in dem in den Fig. 1, 3 und 5 dargestellten Zustand, in dem der Bremsvorgang noch nicht eingeleitet wurde, in Eingriffsöffnungen 32 ein, die jeweils in den Bremsbacken 18 vorgesehen sind. Auf diese Weise werden die Bremsbacken 18 an dem Bremsbackenträger 14 arretiert. Im Falle der Auslösung des Bremssystems zieht der Magnet-Aktuator 28 einen Ringanker, an welchem die Sperrbolzen 24 befestigt sind, um einen definierten Ausrückweg s aus dem Bremsbackenträger 14 und gibt somit die Bremsbacken 18 frei, siehe Fig. 4. Diese legen sich infolge der durch die umlaufende Abtriebswelle 16 erzeugten Fliehkräfte bzw. der Fliehbeschleunigung an die feststehende Bremstrommel 12 an, wodurch die zur Verzögerung der Abtriebswelle 16 erforderliche Reibpaarung zwischen den Reibbelägen 22 der Bremsbacken 18 und der Bremstrommel 12 gebildet wird. Auch wenn die Sperrbolzen 24 bei dem vorliegenden Ausführungsbeispiel mit Hilfe des Magnet-Aktators 28 vor- und zurückbewegt, sei darauf hingewiesen, dass die Sperrbolzen 24 alternativ auch unter der Wirkung einer Federkraft oder dergleichen in einer der beiden Bewegungsrichtungen bewegt werden können. So kann die Vorwärtsbewegung der Sperrbolzen 24 unter Einfluss des Magnet-Aktuators 28 erfolgen, während die Zurückstellung der Sperrbolzen 24 durch ein oder mehrere Federelemente erfolgt, oder umgekehrt.

In Abhängigkeit der geometrischen Abmessungen der Konstruktion definiert sich deren Verstärkungsfaktor C*, wobei dieser für den vorliegenden Aufbau im Bereich der Selbstverstärkung oder der Selbsthemmung des Systems liegen muss. Für diesen Fall wird nur ein kurzer Impuls zur Bildung der Reibpaarung benötigt, da die Bremsbacken 18 infolge des auftretenden Kräftegleichgewichts an die Bremstrommel 12 gepresst werden.

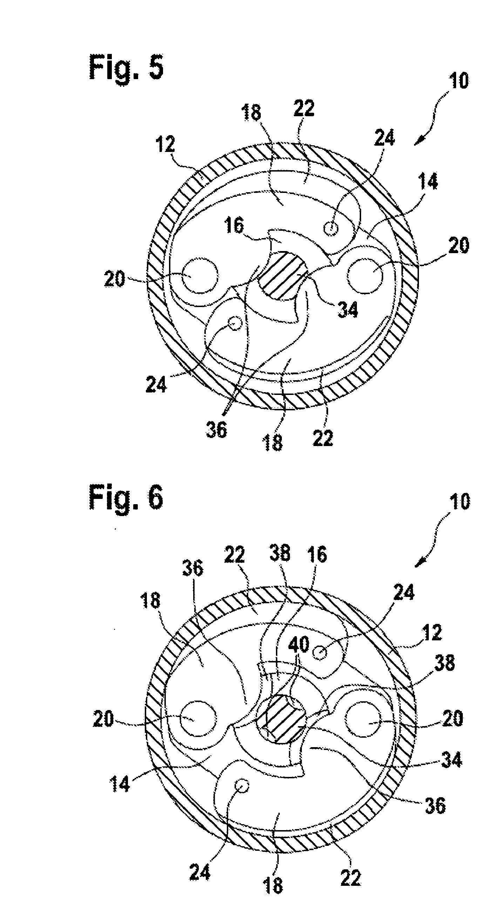

Wie es insbesondere aus den Fig. 3 und 4 hervorgeht, ist die mit Hilfe des Notbremssystems 10 abzubremsende Abtriebswelle 16 als Hohlwelle ausgebildet, in deren Hohlraum eine Antriebswelle 34 aufgenommen ist, die einen Teil des nicht näher dargestellten Antriebsstranges bildet. Um die Abtriebswelle 16 und die Antriebswelle 34 drehfest miteinander zu verbinden, sind an den Bremsbacken 18 in Richtung des Mittelpunktes der Abtriebswelle 16 und der Antriebswelle 34 vorstehende bogenförmige Vorsprünge 36 ausgebildet, die jeweils durch Durchgangsöffnungen 38, die in der Abtriebswelle 16 vorgesehen sind, hindurch greifen und in prismaförmige Aussparungen 40 der Antriebswelle 34 eingreifen, wie es in Fig. 5 dargestellt ist. Durch den Eingriff der an den Bremsbacken 18 vorgesehenen Vorsprünge 36 in die entsprechenden Aussparungen 40 der Antriebswelle 34 werden die Abtriebswelle 16 und die Antriebswelle 34 drehfest miteinander verbunden. Wird der Bremsvorgang ausgehend von dem in Fig. 5 dargestellten Zustand eingeleitet, so drehen sich die Bremsbacken 18, nachdem die Sperrbolzen 24 um den Ausrückweg s aus den Bremsbacken 18 gezogen wurden, um ihre jeweiligen Schwenkbolzen 20 in Richtung der Bremstrommel 12, so dass die an den Bremsbacken 18 angeordneten Vorsprünge 36 aus dem Eingriff mit den zugeordneten Aussparungen 40 der Antriebswelle 34 kommen, wodurch die Antriebswelle 34 von der Abtriebswelle 16 entkoppelt wird. Durch diese Entkopplung wird der Antriebsstrang nicht den während des Abbremsvorgangs erzeugten Verzögerungsmomenten ausgesetzt, so dass dieser nicht beschädigt werden kann. Zudem ist es möglich, die Komponenten des Antriebsstranges weniger robust auszuführen, da diese während des Abbremsvorgangs keinen großen Belastungen unterliegen. So kann beispielsweise der Querschnitt der motorseitigen Antriebswelle 34 kleiner als in demjenigen Fall ausgeführt werden, in dem keine Entkopplungseinrichtung zum Entkoppeln des Antriebstranges vorgesehen ist. Entscheidend ist jedoch der sich hieraus ergebende Vorteil, dass die Anzahl der zu verzögernden Komponenten auf ein Minimum reduziert wird. Dies wirkt sich während der Verzögerungsphase positiv auf die Systemlast aus, wie es zuvor bereits beschrieben wurde.

Aufgrund des zuvor beschriebenen Aufbaus des Notbremssystems 10 kann das Zeitintervall für die Auslösezeit des Bremsvorgangs stark verkürzt werden, da der Bremseingriff zwischen der Bremstrommel 12 und den Bremsbacken 18 unter dem Einfluss der Fliehkraft bzw. Fliehbeschleunigung erfolgt, welche aus der Rotation der Abtriebswelle 16 resultiert. Die Ermöglichung der geforderten Ansprechzeiten im Bereich weniger Millisekunden konnte anhand von Berechnungen prinzipiell nachgewiesen werden.

Zudem realisiert der in den Fig. 1 bis 6 dargestellte Aufbau ein elektromechanisches System ohne die Verwendung weiterer Energieformen, welche unter Umständen die vollständige Reversibilität gefährden und eine Einschränkung für diese bedeuten würden.

Aufgrund der Verwendung eines zweiseitigen Angriffes der Reibumfangskraft der Reibpaarung werden die vorliegenden eingesetzten Wälzlagerungen geschont und müssen aufgrund von Belangen der Dauerhaltbarkeit des Gesamtsystems nicht überarbeitet oder gar neu konzipiert werden, wodurch wiederum eine erhöhte Massenträgheit ins System eingebracht würde.

Durch einen Aufbau, wie er vorliegend beschrieben wurde, werden zudem umlaufende Außengeometrien der Bremseinheit vermieden, wodurch ein leicht zu kapselndes, geschlossenes System mit kompaktem Aufbau realisiert werden kann, welches sich zusätzlich positiv in die speziellen Belange des Arbeitsschutzes im Umgang mit Werkzeugmaschinen eingliedert.

Es versteht sich, dass die Betätigung des Magnet-Aktuators 28 durch Ausgangssignale entsprechender Sensoren erfolgt, die einen Zustand erfassen, in dem ein Bediener gefährlich nahe an das Werkzeug einer Werkzeugmaschine, beispielsweise dem Sägeblatt Säge kommt. Derartige Sensoren sind im Stand der Technik bekannt, weshalb auf diese in der vorliegenden Beschreibung nicht näher eingegangen wurde. Hier seien beispielsweise und nicht abschließend Radarsensoren, insbesondere UWB-Radarsensoren (UWB = Ultra Wide Band) und auch optische Sensoren, insbesondere NIR-Systeme (NIR = Near Infra Red) genannt.

Figur 7 zeigt ein erstes Ausführungsbeispiel einer erfindungsgemäßen Werkzeugmaschine in Form einer Kreissäge, insbesondere einer Standkreissäge (Benchtop System) Die Kreissäge 48 der Figur 7 weist ein Notbremssystem 10 und ein Sensorsystem 52 zur Anwesenheitserkennung einer Materialart 54, insbesondere von Gewebe, wie dem menschlichen Gewebe einer Hand, in einem Werkzeugmaschinenarbeitsbereich 56 auf. Die Vorrichtung 52 zur Detektion weist zumindest einen Sensor 50 auf, der in einer Ebene oberhalb des Arbeitsbereiches der Werkzeugmaschine installiert sein kann, wie dies in Figur 7 angedeutet ist. Alternativerweise kann der Sensor 50 der Vorrichtung 52 auch direkt im Arbeitstisch 40 integriert werden. Beide Möglichkeiten können sowohl einzeln, als auch gleichzeitig realisiert sein, wie dies in Figur 7 beispielhaft dargestellt ist. Die Vorrichtung 52 zur Detektion insbesondere von menschlichem Gewebe aber auch von anderen Materialien kann beispielsweise und nicht abschließend Radarsensoren, insbesondere UWB-Radarsensoren (UWB = Ultra Wide Band) und / oder auch optische Sensoren, insbesondere NIR-Systeme (NIR = Near Infra Red) umfassen.

Bei Detektion beispielsweise einer Hand 54 im Gefahrenbereich unmittelbar vor dem Sägeblatt der Werkzeugmaschine wird eine Aktivitätssignal generiert, welches die Sicherungsbolzen der Bremsbacken löst, so dass diese - wie oben im Detail beschrieben - durch die Fliehkraft getrieben gehen die Bremstrommel 12 getrieben werden und den Abbremsvorgang einleiten.

Sollte zur Drehzahlübersetrung eine Getriebestufe verbaut sein, so ist das System vorteilhafterweise an der Werkzeugwelle anzubringen, um im Falle einer Notbremsung eine Überlastung der Getriebestufe zu vermeiden. Getriebestufe und Motorwelle werden dann folgerichtig, wie oben beschrieben, abgekoppelt.

Auch wenn bei der zuvor beschriebenen Ausführungsform eine Tischkreissäge als Beispiel einer Werkzeugmaschine gewählt wurde, sollte klar sein, dass das Prinzip der vorliegenden Erfindung auch auf andere Werkzeugmaschinen anwendbar ist.

Nachfolgend werden daher beispielsweise und nicht abschließend einige mögliche weitere Werkzeugmaschinen sowie mögliche Integrationsorte für das jeweiliges Notbremssystem 10 kurz vorgestellt. Das Bremssystem 10 ist in den jeweiligen Darstellungen der Werkzeugmaschinen mit B gekennzeichnet und schematisch zu einer Blackbox zusammengefasst, deren Inhalt dem o.g. entspricht.

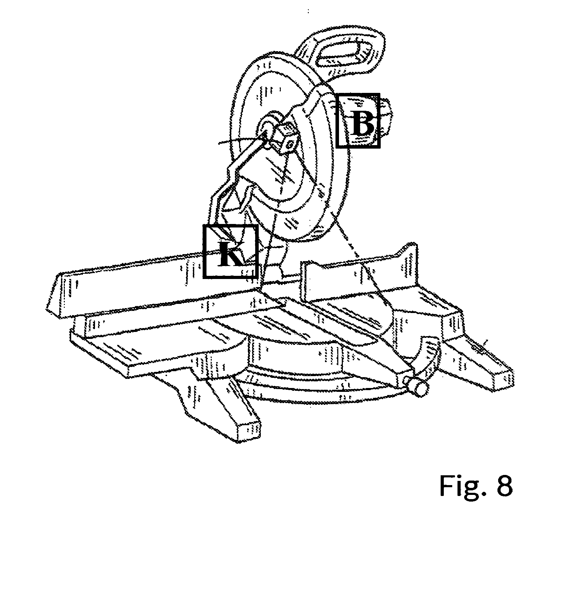

In Figur 8 ist eine Kappsäge als eine mögliche, erfindungsgemäße Werkzeugmaschine dargestellt, welche ebenso stellvertretend für Kapp- und Gehrungssägen gelten kann. Herbei ist eine Integration des Bremssystems 10 (im Folgenden symbolisch in Form des Kastens B dargestellt) in nächst möglicher Nähe zum Sägeblatt vorzuziehen. Sollte zur Drehzahlübersetzung eine Getriebestufe in der Werkzeugmaschine verbaut sein, so ist das System vorteilhafterweise an der Werkzeugwelle anzubringen, um im Falle einer Notbremsung eine Überlastung der Getriebestufe zu vermeiden. Getriebestufe und Motorwelle werden dann folgerichtig, abgekoppelt.

Am unterem Ende des Maschinenarmes, d.h. an dessen Drehpunkt, welcher eine Gelenkverbindung zum Sägetisch der Werkzeugmaschine darstellt, ist weiterhin eine geeignete Einheit K anzubringen, welche im Falle einer Notbremsung das Eintreten einer ungewollten, raschen Kappbewegung des Sägenkopfes und damit des Sägeblattes verhindert. Diese würde als Zwangsbewegung aufgrund des aufzubringenden Bremsmomentes eintreten, wodurch eine nicht hinnehmbare Gefährdung des Anwenders entstünde, welche stets zu verhindern ist.

Die vorzugsweise beschriebene Lage des Bremssystems 10 bzw. B bleibt auch bei Einsatz eines evtl. Keil-, Flach- oder Zahnriementriebes zwischen Motor und Getriebestufe, wie er bei Kapp- und Gehrungssägen, wie beispielsweise der BOSCH GCM12SD, üblich ist, unverändert.

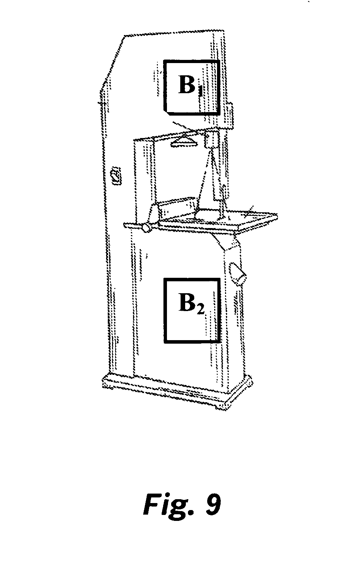

Eine Bandsäge mit schematisch eingezeichnetem Bremssystem ist in Abbildung 9 zu sehen. Hierbei ist es vorteilhaft, die Bremseinrichtung an mindestens einem der beiden innen liegenden Förderräder vorzusehen, vorzugsweise jedoch an jenem, welches eine Verbindung zur Antriebseinheit aufweist. Dies kann wichtig sein, falls es aus Gründen des Zeitanspruches der Bremsung oder zur Schonung des Antriebes sinnvoll erscheint, die Massenträgheit der antreibenden Komponenten abzukoppeln, da dies eine Kernfunktion des Bremssystems darstellt. Alternativerweise können zwei Bremssysteme 10 (entsprechend B₁ und B₂) in dieser Werkzeugmaschine integriert sein. Sollte die Anbindung der Motor- oder Getriebewelle zu einem der Förderräder über Keil- oder Flachriemen bestehen, so ist es möglich, unter in Kaufnahme eines Riemenschlupfes, bei gleichzeitigem Abschalten des Antriebes ein Abkoppeln der Antriebskomponenten zu vermeiden. Das Bremssystem wäre für diesen Fall entsprechend anzupassen.

Wichtig ist hierbei jedoch, dass das Abbremsen mindestens einer der Förderrollen nicht unbedingt auch die sofortige Bremsung des Werkzeuges, sprich des umlaufenden Bandes zur Folge haben muss. Vorteilhafterweise ist hier das Gerät konstruktiv so zu verändern, dass ein Schlupf des Bandes aufgrund dessen Trägheit zielgerichtet vermieden wird.

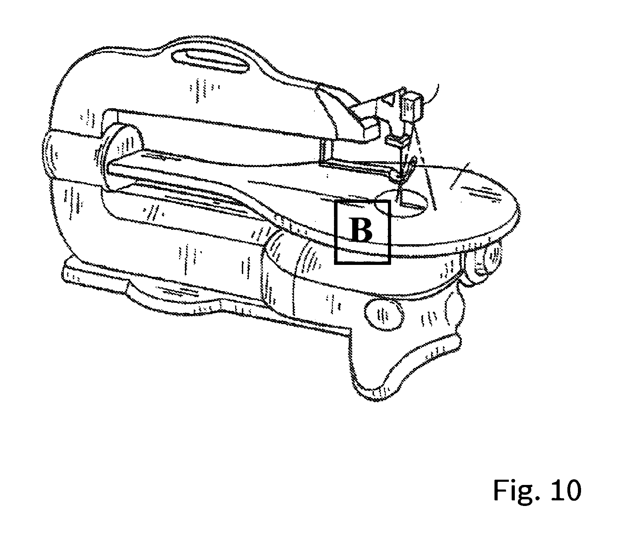

In Abbildung 10 ist eine mögliche Ausführungsvariante einer Dekupiersäge zu sehen. Hier eignet sich das Bremssystem 10 zur Integration im unteren Gehäuseteil, so dass das hier üblicherweise vorliegende Pendelwerk, eine Exzenterwelle o.ä., abgebremst und gleichzeitig, falls erwünscht, die Antriebseinheit abgekoppelt werden kann.

Wichtig hinsichtlich der Wirkung einer solchen Bremsung auf den Bewegungsablauf des Werkzeuges ist jedoch, dass das Abbremsen der gleichmäßig umlaufenden Exzenterwelle je nach jeweiliger Exzenterposition unterschiedliche Abbremsszenarien am Werkzeug zur Folge hat. Dies ist durch den Einsatz des ungleichförmig übersetzenden Getriebes zu erklären.

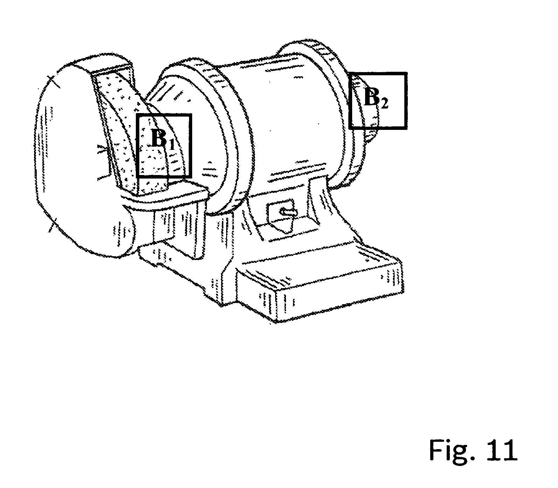

Eine Schleifmaschine ist schematisch in Abbildung 11 dargestellt. Hier kann vorzugsweise Position (B₁) für das Bremssystem 10 genutzt werden, um das Bremssystem zwischen Antrieb und Werkzeug zu positionieren. Dies bringt den Vorteil einer möglichen und zudem einfach zu realisierenden Abkopplung der Antriebseinheit mit sich. Gewöhnlich ist im Falle des hier gezeigten Gerätes jedoch eine direkte Anbindung des Motors zur Schleifscheibe vorgesehen. Da hierdurch keine Getriebestufe vorhanden ist, ermöglicht dies somit ein gefahrloses Abbremsen der gesamten Maschine nebst Antriebseinheit, falls die Abbremsung des zusätzlichen Massenträgheitsmomentes der Antriebskomponenten für die zeitliche Ausdehnung der Bremsung als unkritisch betrachtet wird. Hierfür würde sich ebenso die Einbauposition (B₂) des Bremssystems eignen. Prinzipiell ist es jedoch möglich, beide Einbaufälle für beide Arten der Bremsung, mit und ohne Abkopplung des Antriebes, zu nutzen.

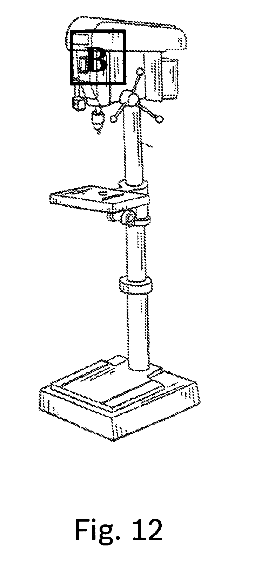

Eine exemplarisch dargestellte Standbohrmaschine ist in Abbildung 12 zu erkennen. Hier ist es sinnvoll, das Bremssystem nahe der Arbeitsspindel vorzusehen, so dass eine gezielte Bremsung des Werkzeuges ermöglicht wird. Aufgrund des in diesen Geräten gewöhnlich verbauten Riementriebes kann es sinnvoll sein, auf eine Abkopplung des Antriebes zu verzichten, wodurch sowohl die Komplexität der Bremseinrichtung, als auch der Arbeitsaufwand zu deren Rücksetzung in den Bereitschaftszustand verringert wird.

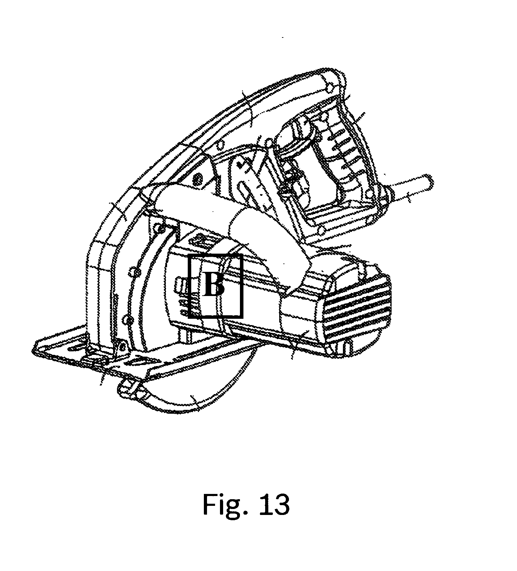

Im Falle der in Abbildung 13 dargestellten Handkreissäge ist das Bremssystem vorzugsweise zwischen Antrieb und Werkzeug anzuordnen. Hierbei sind der Verzögerungscharakteristik ohne die Verwendung einer Zusatzeinrichtung allerdings Grenzen gesetzt. Das durch die erforderlichen Bremszeiten entstehende Verzögerungsmoment kann hier nicht von einem Gehäuse abgestützt oder von einer entsprechenden Gegenmasse dynamisch aufgenommen werden. So würde sich durch bloβe Auslösung einer Notbremsung in einem solchen von Hand gehaltenen Gerät eine Rückschlagwirkung in Drehrichtung des Sägeblattes ergeben, welche ggf. nicht vom Anwender abgestützt werden kann. Vorteilhafterweise besitzt ein solches handgehaltenes System daher einen Gegenschwinger, der die Rückschlagwirkung kompensiert.

Die erfindungsgemäße Werkzeugmaschine ist nicht auf die gezeigten, bzw. besprochenen Ausführungsbeispiele beschränkt, sondern durch die Ansprüche.

## Patentansprüche

1. Werkzeugmaschine mit einem Notbremssystem (10) zum abrupten Abbremsen einer umlaufenden Welle (16) der Werkzeugmaschine, wobei das Notbremssystem zumindest eine Bremstrommel (12) und zumindest eine Bremsbacke (18) umfasst, die zum Abbremsen der Welle (16) miteinander in Eingriff gebracht werden, **dadurch gekennzeichnet, dass** die Bremstrommel (12) und die zumindest eine Bremsbacke (18) derart ausgebildet und angeordnet sind, dass der Bremseingriff zwischen der Bremstrommel (12) und der Bremsbacke (18) unter dem Einfluss einer aus der Rotation einer Welle (16) der Werkzeugmaschine resultierenden Fliehkraft erfolgt.

2. Werkzeugmaschine nach Anspruch 1, **dadurch gekennzeichnet, dass** die zumindest eine Bremsbacke (18) des Notbremssystems (10) schwenkbar an einem Bremsbackenträger (14) befestigt ist, der an der Welle (16) angeordnet ist und mit dieser umläuft.

3. Werkzeugmaschine nach Anspruch 1 oder 2, **dadurch gekennzeichnet, dass** eine Verriegelungseinrichtung (26) vorgesehen ist, die zwischen einer verriegelten Stellung, in der die Bremsbacke (18) an dem Bremsbackenträger (14) gehalten wird, und einer entriegelten Stellung, in der die zumindest eine Bremsbacke (18) derart freigegeben wird, dass diese eine Schwenkbewegung in Richtung der Bremstrommel (12) ausführt, um den Bremseingriff zu erzeugen, verstellbar ist.

4. Werkzeugmaschine nach Anspruch 3, **dadurch gekennzeichnet, dass** die Verriegelungseinrichtung (26) zumindest ein Sperrelement (24) aufweist, dass zwischen einer verriegelten Stellung, in der es mit der zumindest einen Bremsbacke (18) in Eingriff ist, und einer entriegelten Stellung, in der es von der Bremsbacke (18) entkoppelt ist, bewegbar ist.

5. Werkzeugmaschine nach Anspruch 3 oder 4, **dadurch gekennzeichnet, dass** die Verriegelungseinrichtung (26) einen Aktuator (28) aufweist, der die Verriegelungseinrichtung (26) aus der verriegelten Stellung in die entriegelte Stellung überführt.

6. Werkzeugmaschine nach einem der vorhergehenden Ansprüche, **dadurch gekennzeichnet, dass** diese eine Kopplungseinrichtung aufweist, die derart beschaffen ist, dass sie in ihrer gekoppelten Stellung die abzubremsende Welle (16) mit einem Antriebsstrang verbindet, und dass sie während einer Notbremsung automatisch in ihre entkoppelte Stellung überführt wird, in der die abzubremsenden Abtriebswelle (16) von dem Antriebsstrang entkoppelt ist.

7. Werkzeugmaschine nach einem der vorhergehenden Ansprüche, **dadurch gekennzeichnet, dass** das Notbremssystem (10) eine Rückstelleinrichtung zum Zurückbewegen der zumindest einen Bremsbacke (18) in ihre Ausgangslage aufweist.

8. Werkzeugmaschine nach einem der vorhergehenden Ansprüche, **dadurch gekennzeichnet, dass** die Werkzeugmaschine eine Säge, vorzugsweise eine Kreissäge und insbesondere eine Tischkreissäge ist.

## Claims

1. Machine tool having an emergency brake system (10) for the abrupt braking of a rotating shaft (16) of the machine tool, the emergency brake system comprising at least one brake drum (12) and at least one brake shoe (18) which are brought into engagement with one another for the purpose of braking the shaft (16), **characterized in that** the brake drum (12) and the at least one brake shoe (18) are designed and arranged in such a way that the braking engagement between the brake drum (12) and the brake shoe (18) takes place under the influence of a centrifugal force resulting from the rotation of a shaft (16) of the machine tool.

2. Machine tool according to Claim 1, **characterized in that** the at least one brake shoe (18) of the emergency brake system (10) is fastened pivotably to a brake-shoe carrier (14) which is arranged on the shaft (16) and rotates with the latter.

3. Machine tool according to Claim 1 or 2, **characterized in that** a locking device (26) is provided, which is adjustable between a locked position, in which the brake shoe (18) is held on the brake-shoe carrier (14), and an unlocked position, in which the at least one brake shoe (18) is released in such a way that it executes a pivoting movement in the direction of the brake drum (12) in order to generate the braking engagement.

4. Machine tool according to Claim 3, **characterized in that** the locking device (26) has at least one detent element (24) which is movable between a locked position, in which it is in engagement with the at least one brake shoe (18), and an unlocked position, in which it is decoupled from the brake shoe (18).

5. Machine tool according to Claim 3 or 4, **characterized in that** the locking device (26) has an actuator (28) which transfers the locking device (26) out of the locked position into the unlocked position.

6. Machine tool according to one of the preceding claims, **characterized in that** it has a coupling device which is such that, in its coupled position, it connects the shaft (16) to be braked to a drive train, and **in that**, during emergency braking, it is transferred automatically into its decoupled position in which the output shaft (16) to be braked is decoupled from the drive train.

7. Machine tool according to one of the preceding claims, **characterized in that** the emergency brake system (10) has a return device for moving the at least one brake shoe (18) back into its initial position.

8. Machine tool according to one of the preceding claims, **characterized in that** the machine tool is a saw, preferably a circular saw and, in particular, a bench-type circular saw.

## Revendications

1. Machine-outil munie d'un système de freinage d'urgence (10) pour un freinage brusque d'un arbre en mouvement (16) de la machine-outil, le système de freinage d'urgence comprenant au moins un tambour de frein (12) et au moins une mâchoire de frein (18), qui sont amenés en prise l'un avec l'autre pour freiner l'arbre (16), **caractérisée en ce que** le tambour de frein (12) et l'au moins une mâchoire de frein (18) sont réalisés et disposés de telle sorte que l'engagement de freinage entre le tambour de frein (12) et la mâchoire de frein (18) ait lieu sous l'influence d'une force centrifuge résultant de la rotation d'un arbre (16) de la machine-outil.

2. Machine-outil selon la revendication 1, **caractérisée en ce que** l'au moins une mâchoire de frein (18) du système de freinage d'urgence (10) est fixée de manière pivotante sur un support de mâchoire de frein (14), qui est disposé sur l'arbre (16) et qui tourne avec lui.

3. Machine-outil selon la revendication 1 ou 2, **caractérisée en ce qu'**un dispositif de verrouillage (26) est prévu, lequel peut être déplacé entre une position verrouillée dans laquelle la mâchoire de frein (18) est maintenue sur le support de mâchoire de frein (14) et une position déverrouillée dans laquelle l'au moins une mâchoire de frein (18) est libérée de telle sorte qu'elle effectue un mouvement de pivotement dans la direction du tambour de frein (12) afin de produire l'engagement de freinage.

4. Machine-outil selon la revendication 3, **caractérisée en ce que** le dispositif de verrouillage (26) présente au moins un élément de blocage (24) qui peut être déplacé entre une position verrouillée dans laquelle il est en prise avec l'au moins une mâchoire de frein (18) et une position déverrouillée dans laquelle il est désaccouplé de la mâchoire de frein (18).

5. Machine-outil selon la revendication 3 ou 4, **caractérisée en ce que** le dispositif de verrouillage (26) présente un actionneur (28) qui fait passer le dispositif de verrouillage (26) de la position verrouillée à la position déverrouillée.

6. Machine-outil selon l'une quelconque des revendications précédentes, **caractérisée en ce qu'**elle présente un dispositif d'accouplement qui est réalisé de telle sorte qu'il relie l'arbre à freiner (16) à une chaîne d'entraînement dans sa position accouplée, et qu'il passe automatiquement dans sa position désaccouplée au cours d'un freinage d'urgence, dans laquelle l'arbre de sortie à freiner (16) est désaccouplé de la chaîne d'entraînement.

7. Machine-outil selon l'une quelconque des revendications précédentes, **caractérisée en ce que** le système de freinage d'urgence (10) présente un dispositif de rappel pour ramener l'au moins une mâchoire de frein (18) dans sa position de départ.

8. Machine-outil selon l'une quelconque des revendications précédentes, **caractérisée en ce que** la machine-outil est une scie, de préférence une scie circulaire et notamment une scie circulaire à table de menuisier.
